# EUROPEAN PATENT APPLICATION

(11) **EP 2 072 215 A1**
(43) Date of publication of application: **24.06.2009**
(21) Application number: 08254018.8
(22) Date of filing: 16.12.2008
(51) Int. Cl.: B29C 45/14

(54) **Method for making multi-layered molded articles**

(30) Priority: 20.12.2007 CN 200710203281
(71) Applicant: FIH (Hong Kong) Limited, Hong Kong (HK)
(72) Inventor: Wu, Kun-Tsan, Shindian City, Taipei Hsien, Taiwan 231 (CN); Tien, Li-Wen, Shindian City, Taipei Hsien, Taiwan 231 (CN)
(74) Representative: Craven, Ian

(57) **Abstract**

A method of forming a multi-layered molded article includes: providing a source of soft material (12) wound around a reel of a winding machine (80). A portion of the soft material is drawn from the winding machine and into a mold. The mold includes a mold cavity (36). A molten material is injected into the mold cavity to form a substrate (14) moldingly bonded to the soft material. The substrate with the soft material is removed from the mold as a single multi-layered molded article.

## Description

### 1. Field of the Invention

The present invention relates to multi-layer molded articles.

### 2. Description of related art

Molded articles, such as molded shells, are widely used in many technological fields. One example is a molded shell used with a portable electronic device (e.g., a mobile phone) for protecting internal electronic components. Another example is a molded shell used with furniture (e.g., a mini sofa) to provide decoration.

The molded shells may include a plastic substrate having some kind of decorative and/or protective (hereinafter "second") layer formed thereon. The molded shell may be made using an insert molding process. The second layer is placed in the mold cavity and then bonds to the molten plastic injected into the mold for forming the substrate.

Various difficulties may be faced when manufacturing this multi-layer molded article.

Therefore, there is room for improvement within the art.

### BRIEF DESCRIPTION OF THE DRAWINGS

Many aspects of the method for making the multi-layered molded article can be better understood with reference to the following drawings. The components in the drawings are not necessarily drawn to scale, the emphasis instead being placed upon clearly illustrating the principles of the method for making the multi-layered molded article. Moreover, in the drawings like reference numerals designate corresponding parts throughout the several views.

FIG. 1 shows an exploded, schematic view of an exemplary embodiment of the present multi-layered molded article;

FIG. 2 shows a schematic view of a soft sheet material being wrapped in a winding machine;

FIG. 3 shows a schematic view of the soft sheet material being disposed between a female mold portion and a male mold portion;

FIG. 4 shows a schematic view when a male mold portion is closed relative to the female mold portion of FIG. 3; and

FIG. 5 shows a schematic view of the multi-layered molded article after molten material is injected into a mold cavity.

### DETAILED DESCRIPTION OF THE EXEMPLARY EMBODIMENTS

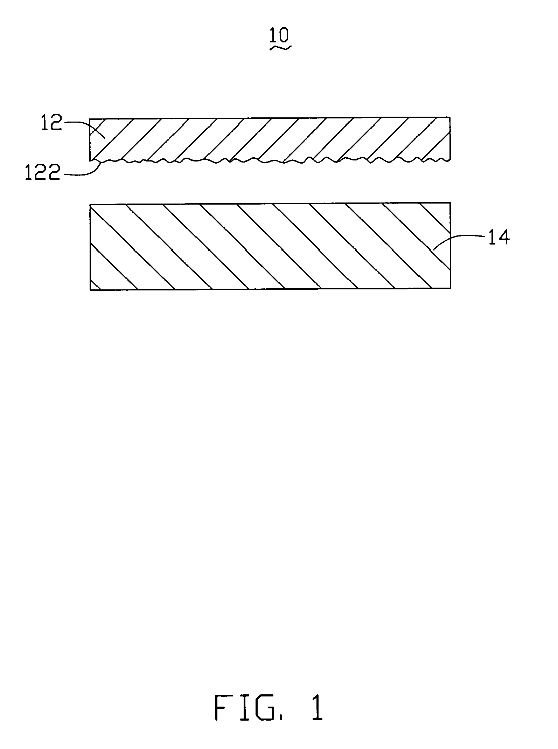

Referring to FIG. 1, in an exemplary embodiment, a multi-layered molded article 10 is shown. Article 10 includes a soft layer 12, and a substrate 14 moldingly bonded to the soft layer 12.

The soft layer 12 can be made of a material that is soft relative to the substrate 14. Exemplary soft materials include leather (natural and artificial), all types of fabrics, woven clothes, textiles, and nylon. One surface of the soft layer 12 acts as a bonding surface 122. The bonding surface 122 should have a rough or coarse surface, formed by, for example, a plurality of tiny pores or projections (schematically shown). For some soft materials, the pores and projections of the bonding surface 122 may be a natural property of the material. For other soft materials, the pores and projections may be formed by grinding or sandblasting the bonding surface 122. The tiny pores and projections of the bonding surface 122 interlock with the molten material used to make substrate 14, thereby increasing the bonding of the soft layer 12 to the substrate 10.

The substrate 14 can be formed by injection molding a moldable material. The moldable material can be any of plastic, rubber, and silicone. The plastic material can be any of polyvinylchloride resin (PVC), polyethylene terephthalate (PET), acrylonitrile-butadiene-styrene (ABS), polycarbonate (PC), polyimide (PI), liquid crystal polymer (LCP), polyetherimide (PEI), polyphenylene sulfide (PPS), polystyrene (PS), polypropylene (PP). In particular, ABS and PC exhibit good adhesion to many softer materials.

The substrate 14 may be formed on the bonding surface 122 of the soft layer 12 by injecting molding. During the injection molding process, the soft layer 12 is directly bonded with the molten material being injected into the mold for forming the substrate 14.

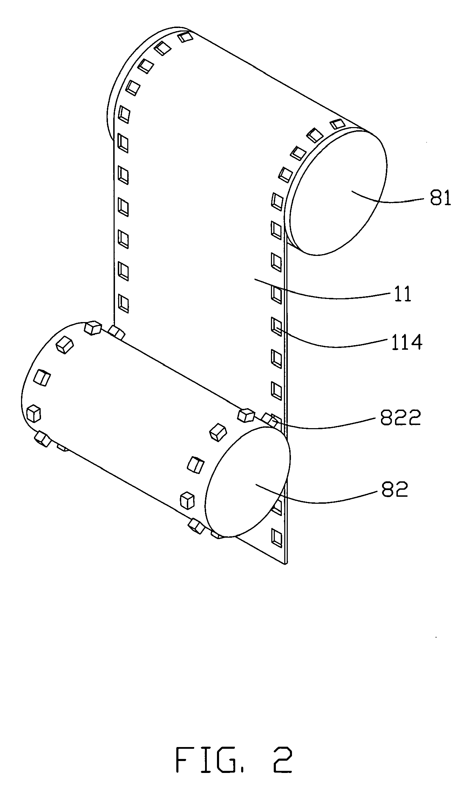

FIGs 2-5 schematically depict the steps of an exemplary method for preparing an exemplary multi-layered molded article 10. A winding machine 80 (only a portion of which is shown) is provided. An upper reel 81 has soft sheet material 11 wound around it. The soft sheet material 11 has a row of rectangular holes 114 along each of its edges. The lower reel 82 also has a row of rectangular blocks 822 formed along each edge circumference. Blocks 822 are slightly smaller than holes 114 so blocks 822 may be inserted into holes 114. Similarly, the distance between each block 822 equals the distance between each hole 114. The free end of the soft sheet material 11 engages the lower reel 82. Therefore, as the lower reel 82 rotates, the soft sheet material 11 is un-wound from upper reel 81 and drawn downward.

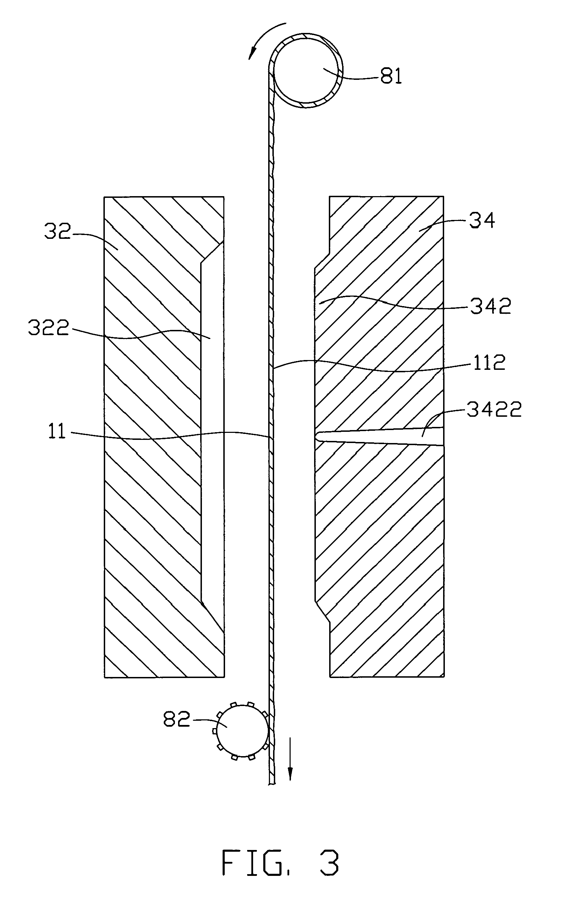

Referring to FIG. 3, the injection mold includes a female mold portion 32 and a male mold portion 34, which mates with the female mold portion 32. The female mold 32 defines a recess 322. The male mold portion 34 has a protrusion 342 formed thereof. A runner 3422 is defined in a central area of the male mold portion 34.

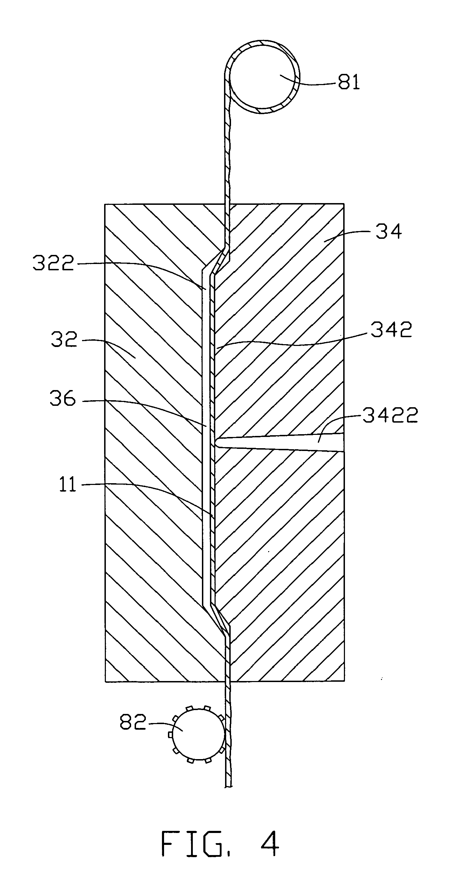

A portion of the soft sheet material 11 is placed between the female mold portion 32 and the male mold portion 34, and the side of soft sheet material 11 that will form bonding surface 122 faces the male mold portion 34. Referring to FIG. 4, when the female mold portion 32 mates with the male mold portion 34, a mold cavity 36 is defined between the female mold portion 32 and the male mold portion 34. When female mold portion 32 and male mold portion 34 are mated, soft sheet material 11 is pushed into contact with protrusion 342.

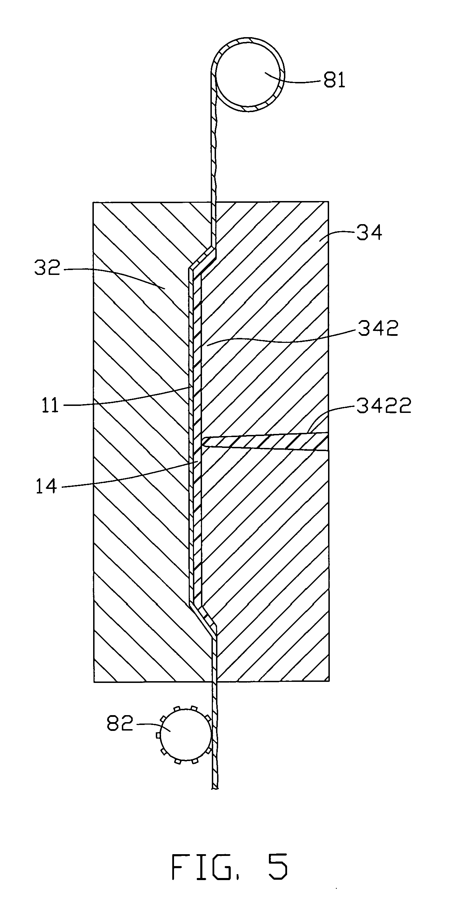

Referring to FIG. 5, the molten material is injected into the mold cavity 36 through the runner 3422. The molten material pushes the soft sheet material 11 away from protrusion 342 and toward the female mold portion 32. When the molded cavity 36 is filled with molten material, the part of the soft sheet material 11 in the mold cavity 36 contacts the female mold portion 32.

The molten material is cooled. The male mold portion 34 is moved away from female mold portion 32. The lower reel 82 begins to rotate, and the blocks 822 engaged with the holes 114 draw the semi-manufactured article out the cavity 36 and another portion of the soft sheet material 11 is drawn into the cavity 36. The injection molding process can repeated until substantially the entire soft sheet material 11 is unwound and completely integrally formed with substrates 14 to form multiple semi-manufactured articles.

Finally, the soft layer/substrate combination semi-manufactured article is cut to a predetermined size and shape, thereby forming the multi-layered molded article 10 with the soft layer 12.

It should be also understood, however, that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A method of forming a multi-layered molded article, comprising:
providing a source of soft material, the soft material being wound around a reel of a winding machine;
drawing a portion of the soft material from the winding machine and into a mold, the mold including a mold cavity;
injecting a molten material into the mold cavity to form a substrate moldingly bonded to the soft material;
removing the substrate with the soft material from the mold as a single multi-layered molded article.

2. The method of forming a multi-layered molded article according to claim 1, wherein the soft material is made of one of leather, fabric, woven clothes, textiles, and nylon.

3. The method of forming a multi-layered molded article according to claim 2, wherein the soft material is made of one of natural leather, artificial leather.

4. The method of forming a multi-layered molded article according to claim 1, wherein the molten material is made of plastic, rubber or silicone.

5. The method of forming a multi-layered molded article according to claim 1, wherein the soft material has a bonding surface having a plurality of tiny pores or projections that interlock with the molten material.

6. A method of forming a multi-layered molded article, comprising:
providing a soft sheet comprising a soft material, the soft material being wrapped around a reel of a winding machine;
rotating the winding machine to fit the soft material into a mold, the mold including a mold cavity;
injecting a molten material into the mold cavity to form a substrate, the soft material moldingly bonding to the substrate;
rotating the winding machine to remove the soft material with the substrate from the mold to allow an adjacent part of the soft material into the mold.

7. The method of forming a multi-layered molded article according to claim 6, wherein the winding machine includes an upper reel and a lower reel, one end of the soft material is wrapped around the upper reel and the other end of the soft material is engaged by the lower reel.

8. The method of forming a multi-layered molded article according to claim 7, wherein the lower reel forms two rows rectangular blocks, and a size of each block is slightly smaller than that of a corresponding hole in the sheet material so each block may be inserted into a corresponding hole.

9. The method of forming a multi-layered molded article according to claim 6, wherein the soft material has a bonding surface having a plurality of tiny pores or protrusions formed thereon, the substrate being bonded to the bonding surface of the soft material.

10. The method of forming a multi-layered molded article according to claim 6, wherein the substrate is made of a material chosen from the group consisting of polyvinylchloride resin, polyethylene terephthalate, acrylonitrile-butadiene-styrene, polycarbonate, polyimide, liquid crystal polymer, polyetherimide, polyphenylene sulfide, polystyrene, polypropylene.
